Europäisches Patentamt

(19) European Patent Office

Office européen des brevets

(11) EP 0 763 937 A1

(12) EUROPEAN PATENT APPLICATION
published in accordance with Art. 158(3) EPC

(43) Date of publication:
19.03.1997 Bulletin 1997/12

(21) Application number: 96907688.4

(22) Date of filing: 28.03.1996

(51) Int. Cl.⁶: H04N 7/015

(86) International application number:
PCT/JP96/00822

(87) International publication number:
WO 96/31054 (03.10.1996 Gazette 1996/44)

(84) Designated Contracting States:
DE ES FR GB IT NL SE

(30) Priority: 28.03.1995 JP 69016/95

(71) Applicant: SONY CORPORATION
Tokyo 141 (JP)

(72) Inventors:
• TATEHIRA, Yasushi,
Sony Corporation
Shinagawa-ku, Tokyo 141 (JP)

• KANOU, Mamoru,
Sony Corporation
Shinagawa-ku, Tokyo 141 (JP)
• KITA, Hiroyuki,
Sony Corporation
Shinagawa-ku, Tokyo 141 (JP)

(74) Representative: Cotter, Ivan John et al
D. YOUNG & CO.
21 New Fetter Lane
London EC4A 1DA (GB)

(54) PICTURE SIGNAL PROCESSOR

(57) A PAL plus signal of the interlace system is supplied to a 133-line delay 22 as a delay element of 133 lines. An output of the delay element is supplied to a field memory 23 and a field memory 25. The field memory 23 is a first memory to delay by one field. An output of the field memory 23 is supplied to a field memory 24 as a second memory. The field memory 24 executes a shuffling process with respect to an A field and reads out the A field at a double speed so that the same A field continues four times. The field memory 25 as a third memory is controlled so as to start the reading operation with a predetermined time delay for the writing operation, executes a shuffling process with respect to a B field, and reads out the B field at a double speed so that the same B field continues four times. The image signals read out from the memories 24 and 25 are supplied to a vertical filter median processing unit 26 as scanning line interpolating means.

Fig. 2A

Fig. 2B

## Description

Technical Field

The present invention relates to an image signal processing apparatus which is applied to process, for example, a television signal of a PAL plus system and, more particularly, to image signal processing apparatus and processing method in which a scanning line interpolating process of an image signal processing apparatus and a flicker-free process for improving a flicker of a large area are made common, thereby reducing the number of memories to be used.

Background Art

In the television broadcasting in the inside and outside of the country, a television system which intends to obtain a high picture quality and a wide screen in a frequency band, for example, 6 Mhz of one channel while keeping a compatibility with the existing broadcasting is considered. The above system has a large feature such that an aspect ratio (ratio of vertical and lateral lengths of the screen) is equal to (9 : 16) and a wide screen which is laterally long for the existing television broadcasting. In Western countries and the like using the existing PAL system, a PAL plus system has been proposed as a television system in the next generation.

In recent years, new media of the radio system and the wire system have appeared one after another owing to the remarkable development of the electric communication techniques. In Europe, the PAL plus broadcasting system in which a wide aspect and a high resolution of the image are realized while maintaining a compatibility with the PAL (Phase Alternation by Line) system as an existing broadcasting system is going to be put into practical use after the experimental broadcasting. In a television receiver of the PAL plus system for decoding the PAL plus broadcasting system, necessary information is extracted by performing a scanning line interpolating process and a broadcast signal is demodulated. A flicker-free process intends to improve a flicker of a large area by a vertical scanning frequency of 50 Hz of the PAL system and is used in many television receivers of the PAL plus system as an indispensable technique to obtain a higher picture quality.

Although the invention is suitable when it is applied to a whole image signal processing apparatuses, the television receiver of the PAL plus system which is going to be put into practical use will now be described as an example of the image signal processing apparatus. The outline of the television receiver of the PAL plus system has been described in "The trend in the television system of the next generation in Europe and America", the magazine of The Institute of Television Engineers of Japan, Vol. 46, No. 3, pp. 276 to 283, 1992.

As disclosed in the above literature, the PAL plus system is made under a condition that all of the following signal processes are executed. They are a letter box conversion, a vertical reinforcement signal process, a motion adaptive Y/C encoding process, and a transmission of an identification (ID) signal and a reference signal. The three processes other than the transmission of the ID signal and the reference signal are switched in accordance with the kind of a signal source by a camera mode in which an image of a television camera is treated and a film mode in which an image of a movie film is treated. There are 50 fields/second in the camera mode and 25 frames/second in the film mode.

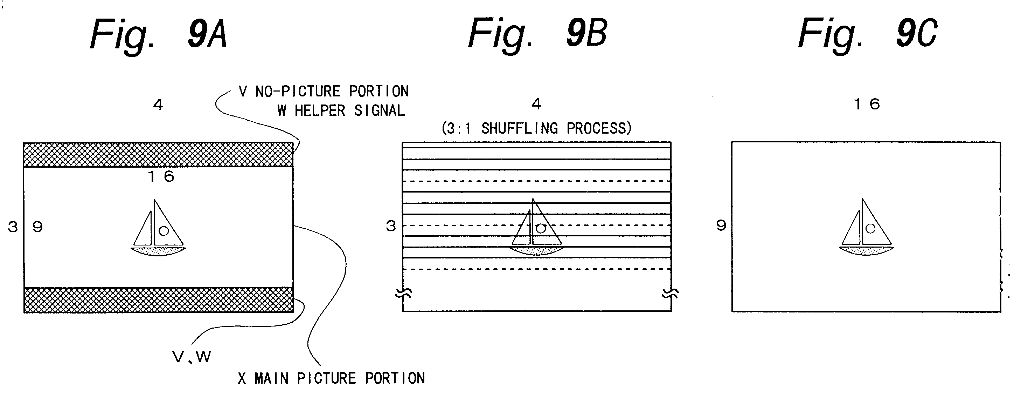

The outline of the television receiver of the PAL plus system to which the invention can be applied will now be described with reference to Figs. 9 to 13.

A scanning line interpolating process of the television receiver of the PAL plus system will be first described with reference to Fig. 9. Fig. 9A is a diagram schematically showing a frame structure of a PAL plus broadcast signal, Fig. 9B is a diagram schematically showing a shuffling process of 3 : 1, which will be described hereinafter, and Fig. 9C is a diagram showing a display example of an aspect ratio of 16 : 9.

As shown in Fig. 9A, the PAL plus broadcast signal is constructed by a main picture portion X and no-picture portions V arranged in the upper and lower portions of the main picture portion X. In the no-picture portion V, a reinforcement signal (hereinafter, referred to as a helper signal) W for reinforcing the vertical resolution is multiplexed. In the PAL plus system, the number of valid scanning lines is equal to 576, the number of scanning lines in the main picture portion X is equal to 430, and the number of scanning lines in the no-picture portion V is equal to 144. That is, on the transmission side, a component signal in which the aspect ratio is equal to (16 : 9) and the number of scanning lines is equal to 625 and the number of valid scanning lines is equal to 576 is subjected to a vertical conversion, thereby reducing the number of scanning lines to 3/4. Therefore, the number of valid scanning lines is set to 430.

In the film mode, the vertical conversion is executed on a frame unit basis. High frequency components of 430 lph (line per height) or more are separated by a filtering process in the vertical direction, thereby obtaining the helper signal of a luminance signal. In the camera mode, the vertical conversion is executed on a field unit basis. High frequency components of 215 lph to 288 lph are separated by a filtering process in the vertical direction, thereby obtaining the helper signal of the luminance signal.

In the television receiver of the PAL plus system, a shuffling process using a memory is executed in order to interpolate the number of valid scanning lines from 430 to 576. That is, as shown in Fig. 9B, information of the helper signal W of one line is inserted every three lines of information of the main picture portion X into the picture plane of the aspect ratio of (4 : 3). For example, after the information of the main picture portion X of lines 1 to 3 was inputted, the information of one line in the helper signal W is inserted. Similarly, the information in the main picture portion X of three lines and the information in the helper signal W of one line are inserted. The above process is called a (3 : 1 shuffling process).

Further, as shown in Fig. 9C, by executing a filtering process to the shuffling processed image by vertical filtering means, a wide image of the aspect ratio of (16 : 9) can be reconstructed. That is, a viewer (user) who owns a receiver of a wide screen of 16 : 9 can reproduce a wide image by performing a decoding process as mentioned above. On the other hand, the user who owns an existing receiver of an aspect ratio of 4 : 3 can reproduce an image as it is in a letter box format as shown in Fig. 9A.

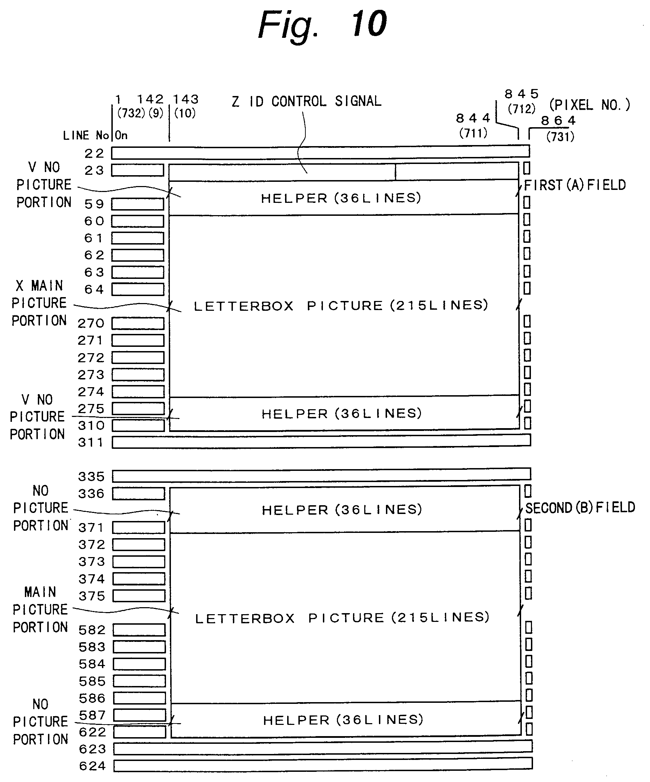

The details of a frame structure of the PAL plus broadcast signal will now be described with reference to Fig. 10. Fig. 10 is a diagram showing the frame structure of the PAL plus broadcast signal.

In Fig. 10, the first field of the PAL plus broadcast signal is constructed by the main picture portion X consisting of 215 lines and the no-picture portions V which are provided in the upper and lower portions of the main picture portion X and each of which consists of 36 lines. The PAL plus broadcast signal, a mode signal, which will be described hereinafter, and an ID control signal (called a WSS signal) Z for detecting the presence or absence or the like of a three-dimensional precombing are inserted in the 23rd line. A composite video signal comprising (215 lines/field) scanning lines having the aspect ratio of 16 : 9 is transmitted in the main picture portion X of the PAL plus broadcast signal. The helper signal as a reinforcement signal to reinforce the vertical resolution of the luminance signal in the main picture portion X is transmitted in the 36 no-picture portion V in the upper and lower portions of the main picture portion X. The second field is also similarly constructed.

In the television receiver of the PAL plus system, the luminance signal of 16 : 9 comprising (287 lines/field) scanning lines is formed from total 287 lines of the (215 lines/field) luminance signals in the main picture portion X and the (72 lines/field in the upper and lower portions) helper signals. With respect to color difference signals, an image of 16 : 9 comprising (287 lines/field) scanning lines is obtained from (215 lines/field) chrominance signals in the main picture portion.

Although such a scanning line interpolating process is usually executed on a frame unit basis, in case of an image (motion image or the like) in which an image of the first field (hereinlater, referred to as an "A field") and an image of the second field (hereinlater, referred to as a "B field") largely differ in one frame, when the process is executed on the frame unit basis, there is a fear such that the picture quality largely deteriorates. Therefore, in the PAL plus system, the mode signal (one bit) indicative of the correlation between the two fields is multiplexed in the ID control signal Z, thereby enabling a certain process to be performed. In case of the above-mentioned film mode, since the image in the A field and the image in the B field are the same image, there is a correlation between the two fields. In case of the camera mode, there is no correlation between the two fields. In the film mode, an intraframe interpolation (vertical filtering process which will be described hereinafter) is executed by using the images in the A and B fields in the same frame. An image or the like by a telecine in which an original image is constructed by 24 frames/second corresponds to the above case. In the camera mode, an intrafield interpolation (vertical filtering process which will be described hereinafter) is executed.

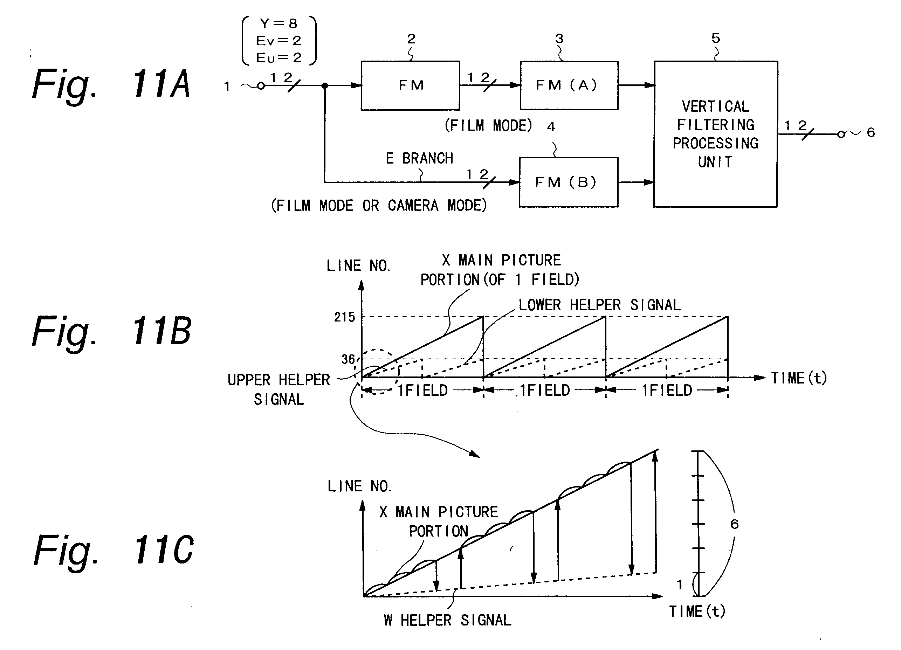

An outline of a scanning line interpolation processing unit of the television receiver of the PAL plus system will now be described with reference to Fig. 11.

Fig. 11A shows the outline of the scanning line interpolation processing unit of the television receiver of the PAL plus system, Fig. 11B schematically shows a state where the shuffling process of the luminance signals and the helper signals is executed when the field memory is read out, and Fig. 11C is an enlarged diagram of leading edge portions in Fig. 11B. An axis of ordinate in each of Figs. 11B and 11C denotes a line number of the luminance signals and helper signals (luminance signals 1 to 215; each of the upper and lower helper signals = 1 to 36) and an axis of abscissa denotes a time t. For simplicity of explanation, a vertical blanking period is not shown in the drawings.

As shown in Fig. 11A, the scanning line interpolation processing unit is constructed by an input terminal 1, field memories (each of which is simply abbreviated to an FM in the diagram) 2, 3, and 4, a vertical filtering processing unit 5, and an output terminal 6. A luminance signal Y having the helper signals multiplexed in the no-picture portions and color difference signals Ev and Eu are supplied from the input terminal 1. Those signals have been converted into digital signals by an A/D conversion. The above-mentioned shuffling process of 3 : 1 is executed by the field memories 2, 3, and 4. The field memory 2 is used for delaying one field and is constructed by, for example, an FIFO. Each of the fields 3 and 4 is constructed by a memory which can be accessed at random. The reason why the field memories 2, 3, and 4 of three fields are necessary is because it is necessary to execute an interpolating process corresponding to each of the above-mentioned film mode and camera mode.

In the construction of Fig. 11A, an input signal of total 12 bits of the luminance signal Y (8 bits) including the helper signals and the color difference signals Eu (B-Y signal) and Ev (R-Y signal) each consisting of two bits is inputted. In the film mode in which a still image or a movie source is mainly treated, the signal is inputted to the field memory 2 as a 1-field delay element in order to execute the intraframe interpolation. The video signal delayed in the field memory 2 is inputted to the field memory 3. On the other hand, the present field is inputted to the field memory 4. Consequently, when the video signals of fields (1A, 1B, 2A, 2B, · · ) to the field memory 4, the video signals of (/, 1A, 1B, 2A, 2B, · · ) each of which was delayed by one field are supplied to the field memory 3.

That is, the A field and the B field of the same frame are simultaneously written into the field memories 3 and 4. When the video signals of the A and B fields in the same frame are read out from the field memories 3 and 4, respectively, the shuffling process of the luminance signal and the helper signals is executed. At the time of reading in the film mode, the same contents are read out from the field memories 3 and 4 for a period of two fields. In the film mode, the vertical filtering processing unit 5 calculates outputs of the fields by using the information of the scanning lines of both of the A and B fields.

In the camera mode in which a motion image is treated, the input video signal is supplied to the field memory 4 via a branch E and the shuffling process is executed by the field memory 4. The video signal from the field memory 4 is inputted to the vertical filtering processing unit 5 at the next stage. In the vertical filtering processing unit 5, the vertical filtering process using the video information of one field is executed, thereby outputting the necessary image information to an output terminal 9. Although the luminance signal process has been described here as an example, with respect to the color difference signals, the scanning line interpolation is executed by an almost similar process except the shuffling process of the helper signals.

Fig. 11B is a diagram for explaining the shuffling process of the luminance signal and the helper signals, which is executed when the field memories 3 and 4 are read out. The luminance signals are read out from the field memories 3 and 4 as shown by solid lines. The helper signals are shuffling processed and are read out as shown by broken lines.

Fig. 11C enlargedly shows a circled portion in Fig. 11B. As shown in Fig. 11C, after the information of first three lines of the luminance signal (line numbers 60, 61, and 62 in Fig. 10) was read out, the information of the head line (line number 24) of the upper helper signal is read out. Further, the information of the next three lines (line numbers 63, 64, and 65) of the luminance signal is subsequently read out, and further, the information of the next line (line number 25) of the upper helper signal is read out. As mentioned above, by repeating the operations for reading out the information of the luminance signal of three lines and reading out the information of the helper signal of one line, the shuffling process can be executed. By controlling write addresses when the luminance signal Y and the helper signals are written into the field memories, the shuffling process is similarly performed and the reading operation can be also sequentially executed.

As a characteristic rule of the PAL plus system, when the complicated memory process as mentioned above is executed in the film mode, there is a rule such that the upper and lower helper signals in Fig. 9A can be eliminated. The fourth embodiment of the invention, which will be described hereinlater, intends to reduce the number of memories which are used by utilizing such a rule.

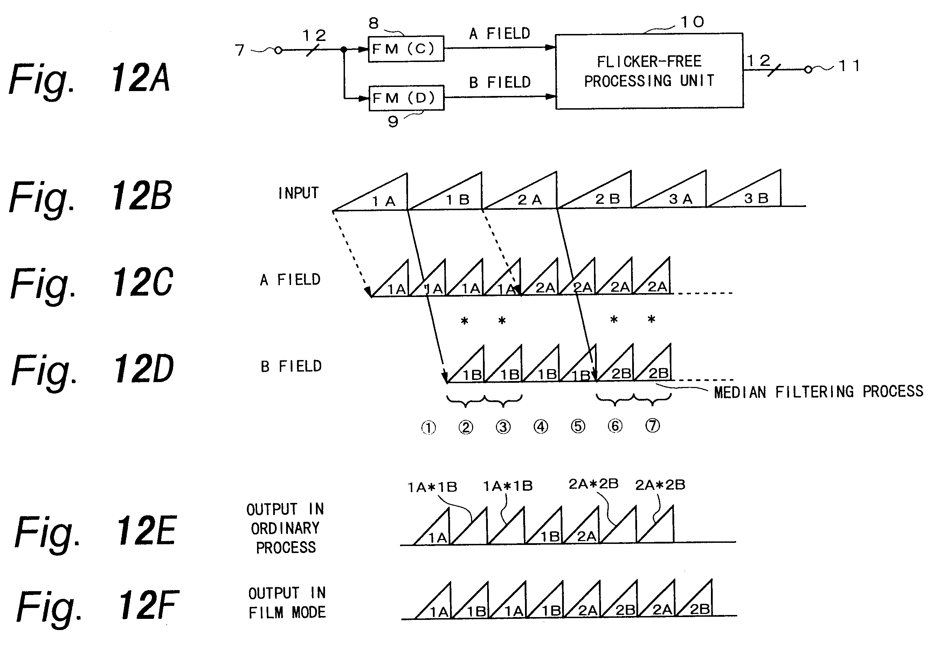

In case of the PAL system or the PAL plus system, the field frequency is equal to 50 Hz. In case of an image of a large area, there is a case where the flicker is recognized. Therefore, a flicker-free which intends to realize a high picture quality by eliminating the flicker is known. The flicker-free is fundamentally achieved by converting the field frequency to 100 Hz. An outline of the flicker-free process will be described with reference to Fig. 12.

Fig. 12A shows a flicker-free processing circuit, Fig. 12B shows an input video signal in each field, Fig. 12C shows an output video signal of the A field, Fig. 12D shows an output video signal of the B field, Fig. 12E shows an output in an ordinary process (camera mode in the ordinary PAL system or the PAL plus system), and Fig. 12F shows an output in the film mode of the PAL plus system.

As shown in Fig. 12A, the flicker-free processing circuit is constructed by an input terminal 7, a field memory 8, a field memory 9, a flicker-free processing unit 10, and an output terminal 11.

A video signal of total 12 bits consisting of the luminance signal Y = 8 bits and the Ev and Eu signals each consisting of 2 bits is inputted from the input terminal 7. Fig. 12B shows a field change of the input signal. When the input signal is supplied, the A field is written into the field memory 8 for the A field and the B field is written into the field memory 9 for the B field. Those video signals have to be subjected to an addition/mean value process by a median filter in order to eliminate the flicker. For this purpose, the signal of the A field is continuously read out from the field memory 8 four times at a double speed as shown in Fig. 12C. Similarly, the signal of the B field is continuously read out from the field memory 9 four times at a double speed as shown in Fig. 12D. Those video signals are inputted to the flicker-free processing unit 10 and the following median filtering process is executed in the flicker-free processing unit 10.

In the ordinary process, the field 1A is outputted as it is in the field period ⟨1⟩. In the field periods ⟨2⟩ and ⟨3⟩, the fields 1A and 1B are subjected to the addition/mean value process by the median filter in the flicker-free processing unit 8, and the signals (expressed by 1A*1B) obtained by the above process are outputted. The median filter executes a process for selecting the median value of pixels of the two fields. For example, in case of the field ⟨2⟩, a process to select the median value of a target pixel and pixels near the target pixel in the A field and the pixel in the B field is executed.

In the field period ⟨4⟩, the field 1B is outputted as it is. In the field period ⟨5⟩, the field 2A is outputted as it is. Further, in the field periods ⟨6⟩ and ⟨7⟩, the process is executed by the median filter and the result is outputted as a 2A*2B signal. By raising the field frequency to the double frequency as mentioned above, the flicker can be eliminated.

As for the video signals in the film mode, since the contents with respect to the time in the A and B fields are the same, the process by the median filter is unnecessary. As shown in Fig. 12F, therefore, the fields are alternately read out at a double speed in a manner such as 1A, 1B, 1A, 1B, 2A, 2B, 2A, and 2B.

As will be obviously understood from the foregoing description with reference to Fig. 11, since it is necessary to execute the scanning line interpolation by using both of the A and B fields in the same frame in the film mode of the PAL plus system, the field memories of total three fields of the field memories 2, 3, and 4 are necessary. On the other hand, as will be obviously understood from the description with reference to Fig. 12, when the median filtering process is performed in the flicker-free process, it is necessary to mix the A and B fields and to perform the filtering process, so that field memories of total two fields of the field memories 8 and 9 are necessary.

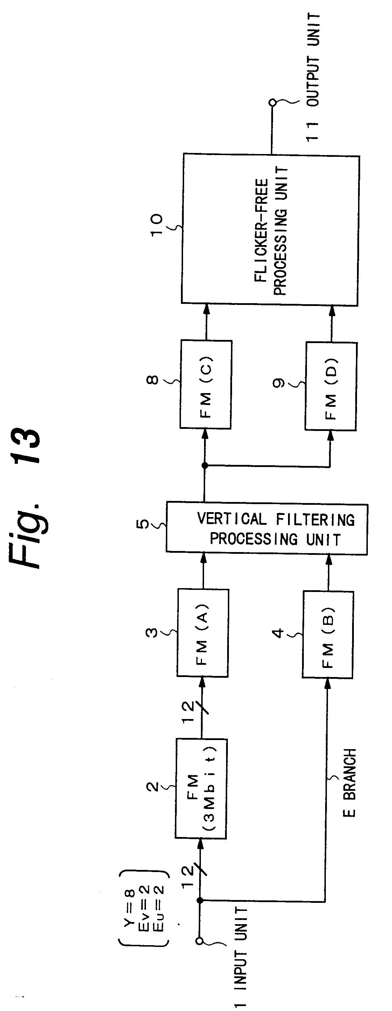

An example of a circuit construction which satisfies both of the above conditions will now be described hereinbelow. Fig. 13 is a block diagram showing a split-type circuit as an example of the television receiver of the PAL plus system.

As shown in Fig. 13, the split-type circuit is constructed by the input terminal 1, the field memory 2 as a field memory of, for example, 3 Mbits, which is necessary to process the A field in the shuffling process, the field memories 3 and 4, the vertical filtering processing unit 5, the field memories 8 and 9 which are necessary for the flicker-free process, the flicker-free processing unit 10, and the output terminal 11.

In case of the film mode, the above-mentioned video signal of 12 bits from the input terminal 1 is inputted to the field memory 2 as a 1-field delay element. The video signal delayed by the field memory 2 is inputted to the field memory 3. On the other hand, the video signal of the present field is inputted to the field memory 4. The timings of the video information of two fields are matched by the field memories 3 and 4 and the information is simultaneously inputted to the vertical filtering processing unit 5 at the next stage. The vertical filtering processing unit 5 executes processes in a manner such that by multiplying a coefficient every line and executing an adding process of a few lines, the continuity of the images which was deteriorated by the shuffling process is assured to thereby make the images smooth. An output of an ordinary interlace signal from the vertical filtering processing unit 5 is supplied to the field memories 8 and 9. On the other hand, in case of the camera mode, the image information from the input terminal 1 is inputted as it is on a field unit basis to the vertical filtering processing unit 5 at the next stage through the branch E and via the field memory 4.

The reading operations from the field memories 8 and 9 are performed at a double speed as mentioned above and the read outputs are inputted to the flicker-free processing unit 10. In the flicker-free processing unit 8, the flicker-free process as described in Fig. 12 is executed and the output obtained by the process is generated from the output terminal 11. In the split-type circuit shown as an example of the television receiver of the PAL plus system, field memories of five fields are necessary. When it is assumed that the capacity of one field memory capacity is equal to, for example, 3 Mbits, a memory of a large capacity of 3 x 5 = 15 Mbits is necessary.

In the television receiver of the PAL plus system, for example, in the film mode, since it is necessary to perform the vertical filtering process by using both of the A and B fields in the same frame, field memories of total three fields are necessary. On the other hand, in case of executing the flicker-free process of a signal in the camera mode or the like, since it is necessary to mix the A and B fields and to perform the filtering process, field memories of two fields are further necessary. As mentioned above, when the scanning line interpolating process of the PAL plus system and the flicker-free process are executed, the field memories of five fields are necessary, so that there are problems such that it is difficult to make an integrated circuit and the costs rise.

It is, therefore, an object of the invention to solve the above-mentioned problems and, more particularly, to provide an image signal processing apparatus and a processing method in which the number of necessary field memories can be reduced by improving a memory construction and a managing method of a television receiver of the PAL plus system.

Disclosure of Invention

The invention provides an image signal processing apparatus in which a reinforcement signal included in an input image signal of an interlace system is extracted, a resolution is reinforced by the extracted reinforcement signal, and further, a signal process to reduce a flicker is executed, characterized by comprising:

a memory which is commonly used both in a shuffling process for rearranging so as to arrange one horizontal scanning line of the reinforcement signal every plurality of horizontal scanning lines in a main picture portion and in a process for doubling a field frequency which is necessary to reduce the flicker.

The invention can be applied to a television signal of a color difference line-sequential system having a reinforcement signal.

As shown in the first embodiment, the memory which is commonly used in the invention comprises:

a first memory to which an input image signal is supplied and which is controlled so as to start the reading operation with a predetermined time delay from the writing operation and executes the shuffling process with respect to first and second fields and reads out the first and second fields at a double speed so that the first and second fields continue twice, respectively;

a second memory to which an image signal is supplied from the first memory and which reads out the first field at a double speed so that the same first field continues four times; and

a third memory to which the image signal is supplied from the first memory and which reads out the second field at a double speed so that the same second field continues four times,

wherein the image signals read out from the second and third memories are supplied to scanning line interpolation means.

As shown in the second embodiment, the memory which is commonly used in the invention comprises:

a first memory which delays an input image signal by one field;

a second memory to which an image signal is supplied from the first memory and which is controlled so as to start the reading operation with a predetermined time delay from the writing operation and executes a shuffling process with respect to a first field and reads out the first field at a double speed so that the same first field continues four times; and

a third memory to which the input image signal is supplied and which is controlled so as to start the reading operation with a predetermined time delay from the writing operation and executes the shuffling operation with respect to a second field and reads out the second field at a double speed so that the same second field continues four times,

wherein the image signals read out from the second and third memories are supplied to the scanning line interpolation means.

Further, in the invention, delay means having a delay amount of a difference between a delay amount resulting from the process and a delay amount of one field is provided on the input side so that the field delay amount is equal to one field.

Further, in the invention, the reinforcement signal which arrives for a period of time during which the memory to execute the shuffling process is being read out is shunted to a shunt area in the memory, and after that, it is read out.

As shown in the third embodiment, the memory which is commonly used in the invention comprises:

a first memory to which an input image signal is supplied and which is controlled so as to start the reading operation with a predetermined time delay from the writing operation and executes a shuffling process with respect to the first and second fields;

a second memory to which an image signal is supplied from the first memory and which reads out the first field at a double speed so that the same first field continues four times;

a third memory to which the image signal is supplied from the first memory and which reads out the second field at a double speed so that the same second field continues four times; and

a fourth memory for delay to which an image signal is supplied from the second memory and which generates an output synchronized with a read output of the third memory,

wherein the image signals read out from the third and fourth memories are supplied to scanning line interpolation means.

As shown in the fourth embodiment, the memory which is commonly used in the invention comprises:

a first memory which is used to delay an input image signal by one field in a film mode in which a scanning line interpolation is executed by an intraframe process and to supplement a delay amount that is insufficient in one field in a camera mode in which the scanning line interpolation is executed by an intrafield process;

switching means to which an image signal from the first memory and an input image signal are supplied and which selects the input image signal in the film mode and selects the image signal from the first memory in the camera mode;

a second memory to which the image signal from the first memory is supplied and which can be accessed at random for the shuffling process; and

a third memory to which the image signal selected by the switching means is supplied and which can be accessed at random for the shuffling process,

wherein the image signals read out from the second and third memories are supplied to scanning line interpolation means.

The invention can be also applied to a television signal of a color difference line-sequential simultaneous system having a reinforcement signal.

The invention provides an image signal processing method in which a reinforcement signal included in an input image signal of an interlace system is extracted, a resolution is reinforced by the extracted reinforcement signal, and further, a signal process for reducing a flicker is performed, characterized by comprising:

a shuffling step of rearranging so that one horizontal scanning line of the reinforcement signal is arranged every plurality of horizontal scanning lines in a main picture portion in order to reinforce the resolution; and
a step of commonly using a memory which is used for the shuffling and executing a process for doubling a field frequency which is necessary to reduce a flicker.

According to the invention, the number of memories which are used can be remarkably reduced by commonly using the memory in the shuffling and the flicker-free operations and hardware such as a memory control circuit and the like can be also simplified.

Brief Description of Drawings

Fig. 1 is a block diagram showing a main portion of an image signal processing apparatus of a television receiver of the PAL plus system of the invention;
Figs. 2A and 2B are a block diagram of the first embodiment of the invention and a schematic diagram showing the relation between the line numbers of respective portions and the time;
Figs. 3A and 3B are a schematic diagram showing the details of a memory control method of the first embodiment of the invention and a diagram showing memory areas;
Figs. 4A and 4B are a block diagram showing a main portion of the second embodiment of the invention and a schematic diagram showing a memory control method;
Figs. 5A and 5B are a schematic diagram showing the details of the memory control method of the second embodiment and a diagram showing memory areas;
Figs. 6A and 6B are a block diagram showing a main portion of the third embodiment of the invention and a schematic diagram showing a memory control method;
Figs. 7A and 7B are a block diagram of the fourth embodiment of the invention and a schematic diagram showing a memory control method;
Fig. 8 is a block diagram of the fifth embodiment in which the invention is applied to a television receiver of the SECAM system;
Figs. 9A, 9B, and 9C are a schematic diagram schematically showing a frame of a PAL plus broadcast signal, a schematic diagram schematically showing a shuffling process of 3 : 1, and a schematic diagram showing a display example of an aspect ratio of 16 : 9;
Fig. 10 is a schematic diagram showing a frame structure of the PAL plus broadcast signal;
Figs. 11A, 11B, and 11C are a block diagram showing an outline of a demodulator of a television receiver of the PAL plus system, a schematic diagram schematically showing a state where a main picture portion was shuffling processed and in which broken lines indicate helper signals which were shuffling processed, and an enlarged diagram of leading edge portions;
Figs. 12A to 12F are a block diagram of a flicker-free processing circuit of a television receiver of the PAL plus system and schematic diagrams showing input video signals in respective fields, an output video signal in an A field, an output video signal in a B field, outputs in ordinary processes, and outputs in a film mode; and
Fig. 13 is a block diagram showing a split-type circuit as an example of the television receiver of the PAL plus system.

Best Mode for Carrying Out the Invention

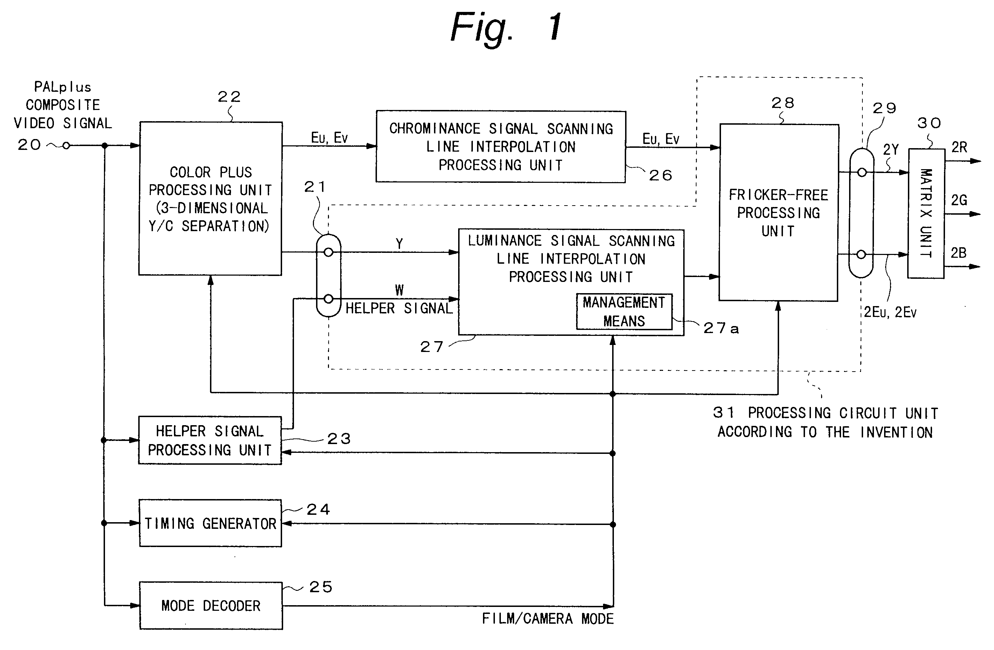

An embodiment of the television receiver of the PAL plus system of the invention will be described hereinbelow with reference to Figs. 1 to 8. A main portion of an image signal processing apparatus of the PAL plus system television receiver according to the invention will be first described with reference to Fig. 1.

A PAL plus composite video signal from an input terminal 20 is supplied to a color plus processing unit 22 for executing a color plus process using a three-dimensional Y/C separation, a helper signal processing unit 23, a timing generator 24 for forming and outputting various timings, and a mode decoder 25 for discriminating film mode/camera mode. A luminance signal from the color plus processing unit 22 and helper signals from the helper signal processing unit 23 are supplied to an input unit 21 in a processing circuit unit 31 surrounded and shown by a broken line. The color difference signals Eu and Ev from the color plus processing unit 22 are supplied to a scanning line interpolation processing unit 26 of chrominance signals. The color difference signals Eu and Ev from the processing unit 26 are supplied to a flicker-free processing unit 28 in the processing circuit unit 31.

The luminance signal and the helper signals from the input unit 21 are supplied to a scanning line interpolation processing unit 27 of the luminance signal. The luminance signal from the processing unit 27 is supplied to the flicker-free processing unit 28. The luminance signal scanning line interpolation processing unit 27 has therein management means 27a comprising a memory as memory means and memory management means. A double-speed luminance signal 2Y and double-speed color difference signals 2Eu and 2Ev from an output unit 29 of the flicker-free processing unit 28 are supplied to a matrix unit 30 and double-speed RGB signals 2R, 2G, and 2B are obtained. Although not shown, a display processing unit to which the double-speed RGB signals are supplied is provided and a display apparatus such as CRT, liquid crystal, or the like is connected to the display processing unit.

A mode ID signal formed by the mode decoder 25 is supplied to the color plus processing unit 22, helper signal processing unit 23, timing generator 24, luminance signal scanning line interpolation processing unit 27, and flicker-free processing unit 28.

The operation of the image signal processing apparatus of the television receiver of the PAL plus system with the above-mentioned construction will now be described.

The PAL plus composite video signal inputted from the input terminal 20 is supplied to the color plus processing unit 22, helper signal processing unit 23, timing generator 24, and mode decoder 25 in parallel. In the color plus processing unit 22, the composite video signal which was subjected to a 3-dimensional precombing on the transmission side and transmitted is subjected to a 3-dimensional Y/C separation by using a three-dimensional filter or the like corresponding to the characteristics of the signal. The precombing is executed by arithmetically operating the luminance signal and the chrominance signals between fields by using field memories. When the 3-dimensional precombing is not executed on the transmission side, a two-dimensional Y/C separation is executed. The presence/absence of the 3-dimensional precombing can be known by the foregoing ID control signal Z.

In the color plus processing unit 22 and luminance signal scanning line interpolation processing unit 27, processes corresponding to the respective modes are executed. In the film mode, the scanning line interpolation is performed in a manner such that an intraframe process is executed from the images of the A and B fields in the same frame and the Y/C separation is executed in a motion non-adaptive manner. In the camera mode, two fields in the same frame relate to images of different timings, the Y/C separation is motion adaptively processed and the scanning line interpolation is executed by an intrafield process.

In the helper signal processing unit 23, reinforcement signals which are provided in the upper and lower no-picture portions of the PAL plus composite video signal and are modulated by a color carrier signal and are transmitted are demodulated and are subjected to an amplitude adjustment (the reinforcement signals subjected to such a process are called helper signals in the specification). The luminance signal Y outputted from the color plus processing unit 22 and the output (helper signals) of the helper signal processing unit 23 are inputted to the processing circuit 31 according to the invention via the input unit 21. The timing generator 24 forms various timing signals necessary for the television receiver of the PAL plus system and generates. Further, the mode decoder 25 decodes the ID control signal Z multiplexed in a vertical blanking portion (the 23rd line) and transmits necessary information to the respective units.

The chrominance signal scanning line interpolation processing unit 26 converts the chrominance signal of 215 lines/field into the signal of 287 lines/field of the number which is 4/3 times as large as 215 by the intrafield scanning line interpolating process or the like and generates. The helper signals are not used in the color signal scanning line interpolation processing unit 26. In the luminance signal scanning line interpolation processing unit 27, various memories are controlled by the management means 27a comprising the memory as internal memory means and memory control means, so that the video information of the main picture portion (mainly luminance signal) in which there are 215 lines per field is converted into the luminance signal of total 287 lines together with the luminance signal having the helper signals of 72 lines which are inserted into the no-picture portions and is outputted. The luminance signal scanning line interpolation processing unit 27 has a vertical filter, assures the continuity of images which was deteriorated by the shuffling process, forms an image in which vertical high frequency components are reinforced by the helper signal, and outputs.

The flicker-free processing unit 28 executes a field double-speed converting process to the luminance signal Y and color difference signals Eu and Ev of 16 : 9 having 287 lines per field which are obtained by the color signal scanning line interpolation processing unit 26 and luminance signal scanning line interpolation processing unit 27. The frequency of each of the signals is converted to a field frequency of 100 fields per second by the flicker-free processing unit 28. Thus, a flicker of a large area due to the field frequency of 50 Hz is eliminated.

In the matrix unit 30, the field double-speed signal 2Y and color difference signals 2Eu and 2Ev outputted from the flicker-free processing unit 28 via the output unit 29 are converted into double-speed RGB signals 2R, 2G, and 2B to be inputted to a display device such as liquid crystal display apparatus, cathode ray tube (CRT), or the like and are outputted.

The construction and operation of the general television receiver of the PAL plus system has been described above. The constructing portion which is indispensable to obtain a denomination of the television receiver corresponding to the PAL plus comprises the helper signal processing unit 23, color signal scanning line interpolation processing unit 26, and luminance signal scanning line interpolation processing unit 27. Therefore, television receivers of the PAL plus system with various structures mainly having such an indispensable constructing portion can be considered. The targets of the invention are television receivers having all of the structures including such an indispensable constructing portion and the invention particularly relates to a method of reducing the number of memories which are used in the luminance signal scanning line interpolation processing unit 27, the management means 27a including the memory in the luminance signal scanning line interpolation processing unit, and the flicker-free processing unit 28. The prossing circuit unit 31 according to the invention is shown by a broken line and it is assumed that the management means 27a is integrally formed with the luminance signal scanning line interpolation processing unit 27. Some embodiments of the processing circuit unit 31 will now be described hereinbelow.

First embodiment

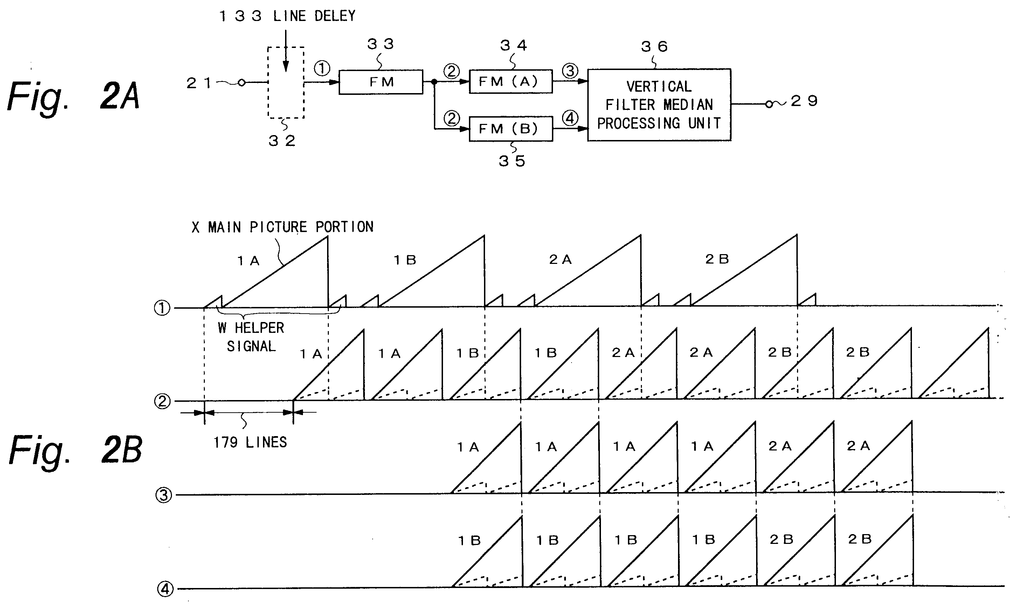

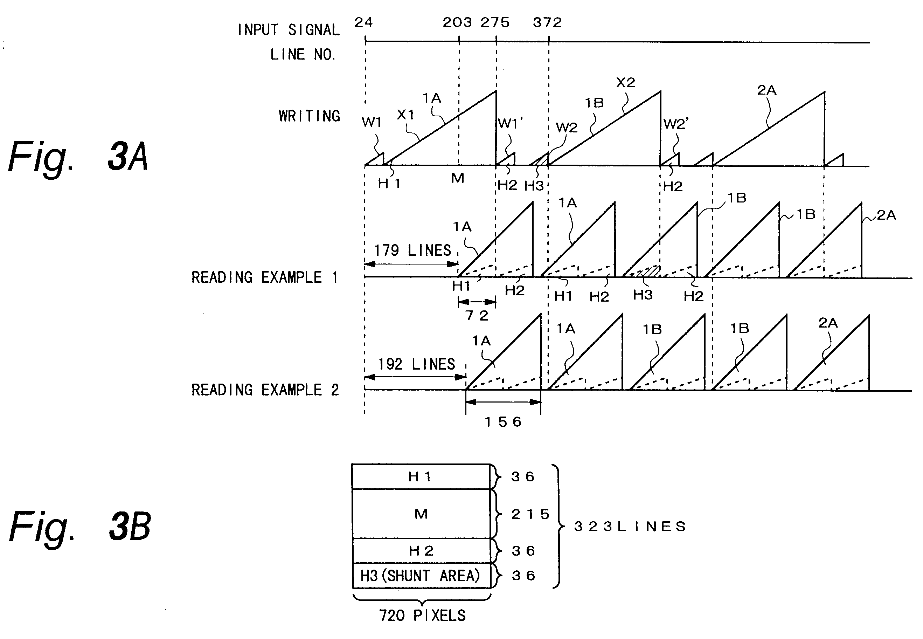

A construction of the first embodiment of the television receiver of the invention will be described with reference to Figs. 2 and 3.

Fig. 2A is a block diagram showing a construction of the processing circuit unit 31 in the first embodiment and Fig. 2B is a schematic diagram showing the relation between the line numbers of respective units and the time.

As shown in Fig. 2A, the first embodiment comprises the input unit 21 to which the main picture portion and the helper signals are inputted, a 133-line delay 32 as a delay element of 133 lines, a field memory 33 which can be accessed at random on a line unit bases, a field memory 34, a field memory 35, a vertical filter median processing unit 36, the output unit 29, and the like.

The operation of the first embodiment of the invention will now be described.

As shown in Figs. 2A and 2B, the video signal inputted from the input unit 21 is supplied to the 133-line delay 32. The 133-line delay 32 supplements a delay amount of 133 lines which lack in one field (312 lines) and inputs a video signal ⟨1⟩ as shown in Fig. 2B into the field memory 33 which can be accessed at random on a line unit basis. In the field memory 33, by performing an address jump on a line unit basis, the above-mentioned helper signals in the upper and lower no-picture portions are shuffled to the main picture portion (luminance signal) and are continuously read out as a double-speed video signal ⟨2⟩ twice.

The field memory 34 and field memory 35 execute the operation to extend the video signals which were continuously read out twice from the field memory 33 to the video signals which continue four times. That is, in the field memory 34, by continuously reading out the continuous two video signals of the A field twice, a video signal ⟨3⟩ in which the same A field continues four times is formed and outputted. Similarly, in the field memory 35, by continuously reading out continuous two video signals of the B field twice, a video signal ⟨4⟩ in which the same B field continues four times is formed and outputted.

The video signal ⟨3⟩ in which the A field continues four times and the video signal ⟨4⟩ in which the B field continues four times are inputted to the vertical filter median processing unit 36 at the next stage, are subjected to a process so as to assure the continuity of the images which were deteriorated by the shuffling process and to smooth the image, and are outputted as an ordinary interlace signal from the output unit 29.

Further, the details of the memory control method of the first embodiment of the invention will now be described with reference to Fig. 3.

Fig. 3A is a schematic diagram showing the details of the memory control method of the field memory 33. Fig. 3B is a diagram showing memory areas in the memory 33.

The top stage in Fig. 3A shows the line numbers of the input signal and the writing operation is shown on the lower side of the line numbers. In the writing operation, an upper helper signal W1 of the A field is written into a memory area H1 shown in Fig. 3B, the information of a main picture portion X1 (luminance signal) is written into a memory area M, and a lower helper signal W1' is written into a memory area H2, respectively. Further, an upper helper signal W2 of the B field shown as a hatched region is written into a shunt area H3 in the memory in Fig. 3B, the information of a main picture portion X2 (luminance signal) is written into the memory area M, and a lower helper signal W2' is written into the memory area H2, respectively. A reading example 1 shown in Fig. 3A relates to an example in which the reading operation is started fastest from the start of the writing operation of the input signal. In the reading example 1, when considering a point that it is difficult to read out before writing as a minimum condition for reading out, a timing when the reading operation can be started fastest is a timing in case of simultaneously starting the writing and reading operations into/from the area H2. The timing to start the reading operation of the field 1A in this instance is calculated as follows. The numerical values written in the top portion in Fig. 3 show the time by setting the line number (line numbers of one field are set to 1, 2, 3, ..., 311, and 312) of the input signal to a unit.

From the condition such that the start of the writing operation to the area H2 and the start of the reading operation from the area H2 are simultaneously executed, the timing to start the reading operation from the area H2 is set to 275 lines. Prior to it, since it is necessary that the reading operation of 144 lines has already been finished, it is necessary to start the reading of the field 1A at a timing that is 144 lines before (72 lines when the input signal is used as a reference) in the field double-speed reading operation. When considering the above point,

9

275 (reading start line of the area H2) - 24 (writing start line of the field 1A) -
72 (reading of the field 1A prior to the reading of the area H2) = 179 lines

The upper helper signal W1 of the A field, the main picture portion X1 (luminance signal), and the lower helper signal W1' are continuously read out twice at a double speed from the memory area H1, memory area M, and memory area H2, respectively. At the time of the reading, the 3 : 1 shuffling process is executed. As mentioned above, in order to start the reading operation with a delay of 179 lines, the 133-line delay 32 is provided, thereby matching the total delay time with one field (312 lines).

Although the upper helper signal W2 of the B field arrives during the reading operation of the field 1A, the upper helper signal W2 is once shunted into the shunt area H3 in the memory. Subsequently, the operation is shifted to the reading of the B field, the upper helper signal W2 is read out from the shunt area H3 in the memory. The main picture portion X2 of the B field and the lower helper signal W2' are continuously read out twice at a double speed from the area M in the memory and the area H2 in the memory, respectively.

Subsequently, in the "Reading example 2", the reading operation from the field memory 33 is started latest for the writing operation. In this example as well, when considering a point that it is difficult to read out before the writing as a minimum condition for reading, a timing when the reading operation can be started latest is a timing in case of starting the reading operation at the second time of the field 1A simultaneously with the arrival of the main picture portion X2 of the B field. The timing for reading out the field 1A at the first time is calculated as follows.

In order to start the reading operation of the field 1A at the second time at the 372nd line as shown in the reading example 2 in Fig. 3, prior to it, it is necessary to finish the reading operation of the field 1A at the first time of 312 lines (including the blanking interval). Since the 312 lines are read out at a double speed, it corresponds to 156 lines when the input signal is set to a reference. When considering the above point,

372 (reading start line at the second time of the field 1A) - 24 (writing start line of the field 1A) -
156 (the number of reading lines of the field 1A including the blanking interval prior to the reading
operation at the second time of the field 1A) = 192 lines

correspond to the delay amount when the reading operation is started latest. In this case, a 120-line delay is necessary in place of the 133-line delay. The case where the reading operation is started from this time point will now be described hereinbelow. In this example, when considering a point that it is necessary to complete the reading operation of the main picture portion X1 (luminance signal) of the A field before the main picture portion X2 (luminance signal) of the B field arrives, the reading operation is started by setting 192 lines to a start point of the reading operation. First, the helper signal W1 of the A field, the main picture portion X1 (luminance signal), and the lower helper signal W1' which was shuffling processed are continuously read out twice at a double speed from the memory area H1, memory area M, and memory area H2, respectively. At the time of the reading operation, the 3 : 1 shuffling is executed.

Although the upper helper signal W2 of the B field arrives during the reading of the field 1A, the upper helper signal W2 is once shunted into the shunt area H3 in the memory. Subsequently, the operation is shifted to the reading operation of the B field. The upper helper signal W2, the main picture portion X2 of the B field, and the lower helper signal W2' are continuously read out twice at a double speed from the shunt area H3 in the memory into which the signal W2 has already been shunted, the area M in the memory, and the area H2 in the memory, respectively. As mentioned above, since there is a limitation such that the reading of the A field has to be started before starting the writing of the main picture portion X2 (luminance signal) of the B field, the start point of 192 lines relates to a case of the largest delay amount.

Although five field memories were used, according to the embodiment, the memory amount can be reduced to (3 memories + 120 ~ 133-line delay).

Second embodiment

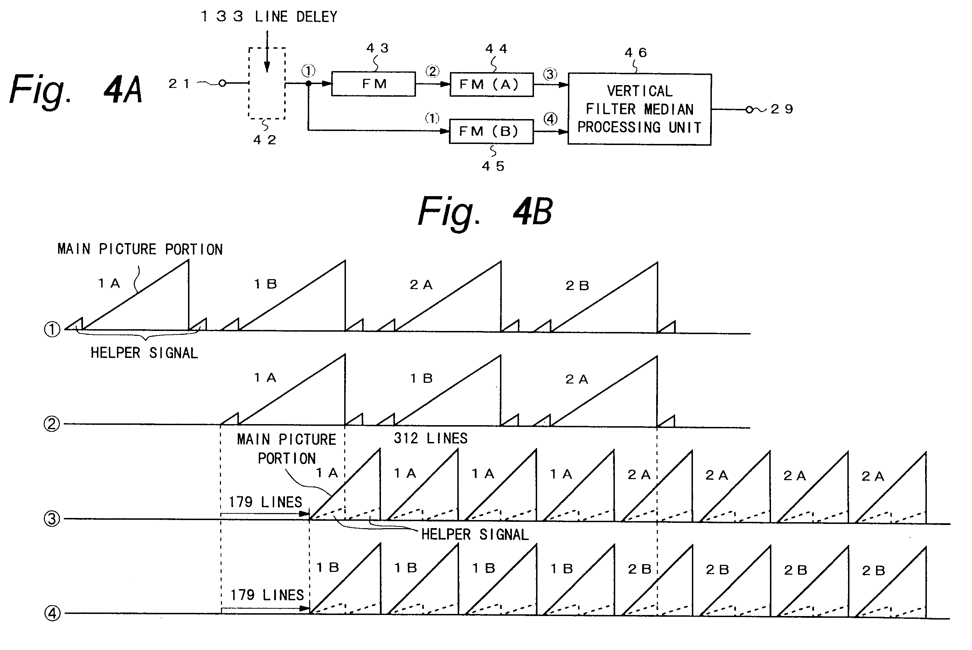

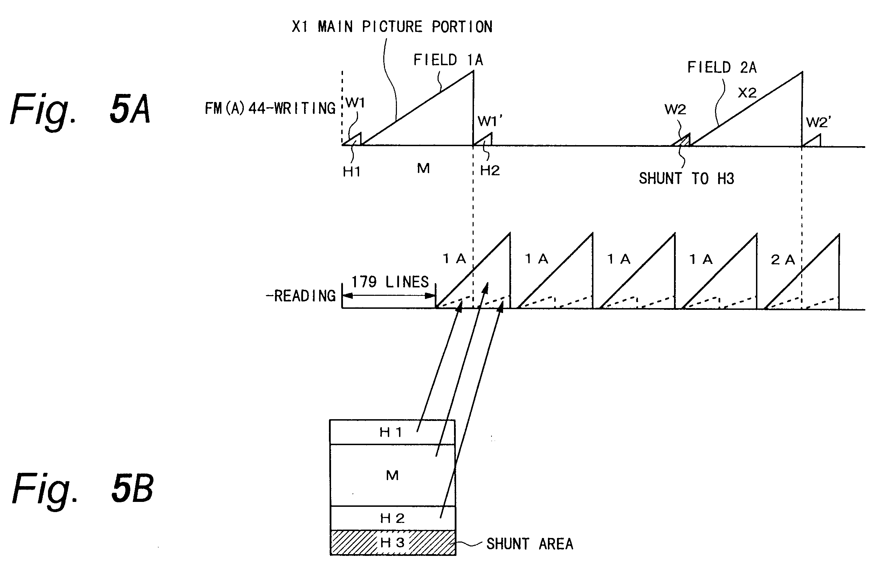

The second embodiment of the invention will now be described with reference to Figs. 4 and 5. Fig. 4A is a block diagram showing a construction of the processing circuit unit 31 in the second embodiment. Fig. 4B is a schematic diagram showing the relation between the line numbers of respective units and the time.

As shown in Fig. 4A, the second embodiment comprises: the input unit 21 to which the main picture portion (luminance signal) and the helper signals are inputted; a 133-line delay 42 of a delay amount of 109 lines; a field memory 43; field memories 44 and 45 which can be accessed at random on a line unit basis; a vertical filter median processing unit 46; the output unit 29; and the like.

In such a construction, the video signal inputted from the input unit 21 is inputted to the 133-line delay 42. The 133-line delay 42 supplements the 133 delay amount of an insufficient amount for one field (312 lines), forms the video signal shown in ⟨1⟩in Fig. 4B, and supplies the formed video signal into the field memories 43 and 45 at the next stage. Namely, the second embodiment of the invention has a delay amount of 179 lines. Since such a delay amount is less than one field (312 lines), 109 lines as a lack amount are supplemented by the 109-line delay 42, thereby constructing so as to obtain a delay of one field. Thus, a disturbance of a video image such as an AFC (Automatic Freqency Control) error or the like at the time of the input or the like of a VTR signal can be avoided.

The field memory 43 delays the signal of the A field by one field, thereby forming the video signal that is deviated by one field as shown in ⟨2⟩in Fig. 4B. An output of the field memory 43 is outputted to the field memory 44 which can be accessed at random on a line unit basis at the next stage. In the field memory 44, the address jump is performed on a line unit basis, the foregoing helper signal is fetched into the main picture portion by the shuffling process, and it is continuously read out four times as a double-speed signal from the field memory 44 (⟨3⟩in Fig. 4B).

The signal of the B field is inputted as it is into the field memory 45 which can be accessed at random. In the field memory 45, the address jump is executed on a line unit basis. The foregoing helper signal is fetched into the main picture portion by the shuffling process and is continuously read out four times as a double-speed signal from the field memory 45 (⟨4⟩in Fig. 4B).

In Fig. 4B, the signal ⟨3⟩of the A field which was read out continuously four times and the signal ⟨4⟩of the B field which was continuously read out four times are simultaneously inputted to the vertical filter median processing unit 46. In the vertical filter median processing unit 46, a process (for smoothing the image) for assuring the continuity of the images which were deteriorated by the shuffling process is performed and the resultant signal is outputted as an ordinary interlace video signal to the output unit 29.

In the second embodiment as mentioned above, since the video signals of the A and B fields are continuously simultaneously inputted four times to the vertical filter median processing unit 46, the vertical filtering process in the film mode to execute the process by simultaneously using the video signals of the A and B fields of the same frame mentioned in Fig. 11 and the flicker-free process mentioned in Fig. 12 can be simultaneously executed. However, to realize such processes, it is necessary to perform a special memory control and such a memory control method is an essential method of the embodiment.

Referring to Fig. 5, the memory control method according to the second embodiment will now be described in more detail. Fig. 5A is a schematic diagram showing the details of the memory control method of the second embodiment. Fig. 5B is a diagram showing memory areas.

In "FM(A) 44 - Writing" in Fig. 5A, the upper helper signal W1 of the A field is written into an area H1 in the field memory 44 in Fig. 5B, the information of the main picture portion X1 (luminance signal) is written into a memory area M, and further, the lower helper signal W1' is written into a memory area H2, respectively.

As mentioned above, in "FM(A) 44 - Reading" in Fig. 5A, a start point for reading is set to a point after 179 - 192 lines after the start of the writing. In the embodiment, a point after 179 lines from the start of the writing is set to a start point and the reading operation is started. The upper helper signal W1, the main picture portion X1 (luminance signal), and the lower helper signal W1' are continuously read out four times at a double speed from the H1 area in the memory, the M area in the memory, and the H2 area in the memory, respectively. By controlling the read addresses, the 3 : 1 shuffling process as mentioned above can be performed.

As shown by a hatched region, although the upper helper signal W2 of the next field 2A comes while the field 1A is continuously read out, the upper helper signal W2 is once shunted into the shunt area H3 in the memory 44.

Subsequently, when the written field 2A is read out, in a manner similar to the above, the upper helper signal W2 is read out from the shunt area H3 (36 lines) in the memory into which it has already been shunted. The main picture portion X2 (luminance signal) of the field 2A and the lower helper signal W2' are continuously read out four times at a double speed from the M area in the memory and the H2 area, respectively. Even in the B field, the writing and reading operations are executed by a similar method.

As mentioned above, in the embodiment, by the special memory control, the field memory necessary for the vertical filtering and the field memory necessary for the flicker-free process are commonly used. Therefore, as compared with the five field memories which are used in the television receiver of the PAL plus system as mentioned above, it is possible to construct by three fields + 133-line delay and the number of field memories can be reduced. Further, by eliminating the use of the VTR, since the 133-line delay is unnecessary, the 133-line delay can be omitted. It is sufficient to use three field memories. The further reduction of the memory amount can be realized.

Embodiment 3

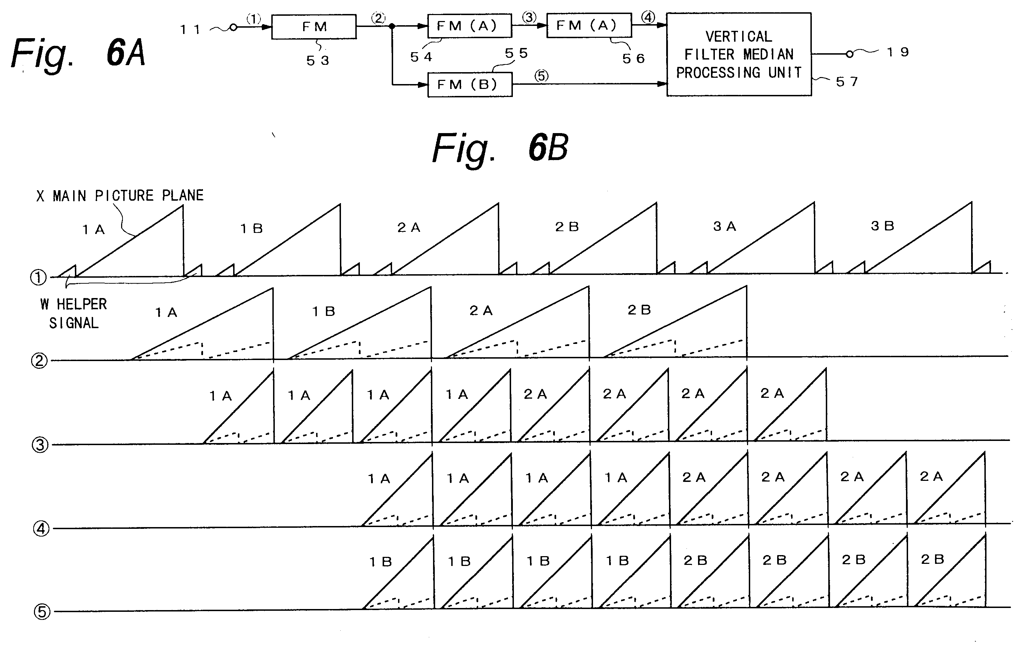

The third embodiment relates to an example in which the field memory is used in place of the 133-line delay in the first and second embodiments and will be described with reference to Fig. 6. Fig. 6A is a block diagram showing a construction of the third embodiment. Fig. 6B is a schematic diagram showing a memory control method of each unit.

The third embodiment comprises: the input unit 11 to which the video signal is inputted; a field memory which can be accessed at random on a line unit basis; field memories 54, 55, and 56; a vertical filter median processing unit 57; an output unit 19; and the like.

The operation of the third embodiment will now be described with reference to Fig. 6.

The video signal ⟨1⟩shown in Fig. 6B inputted from the input unit 11 is inputted to the field memory 53 which can be accessed at random on a line unit basis. In the field memory 53, the address jump is executed on a line unit basis, thereby performing the shuffling process to the helper signals in the upper and lower no-picture portions to the main picture portion (luminance signal). By reading out the processed signals at an ordinary speed (this means that the double-speed process is not executed), they are outputted as a video signal ⟨2⟩ Thus, the video signal ⟨2⟩which is deviated from the video signal ⟨1⟩by 1/2 field is formed.

By performing the double-speed process to the video signal ⟨2⟩which is deviated by 1/2 field and continuously reading out four times from the field memory 54, the video signal ⟨3⟩is formed. In the field memory 56, a delay process of two fields is executed and the video signal ⟨4⟩is outputted. In the field memory 55, by performing the double-speed process to the B field signal and continuously reading out four times, the video signal ⟨5⟩is formed and outputted. The video signal ⟨4⟩in which the A field continues four times and the video signal ⟨5⟩in which the B field continues four times are inputted to the vertical filter median processing unit 57. In the vertical filter median processing unit 57, the continuity of the images which were deteriorated by the shuffling process is assured and the signal is outputted from the output unit 19 as a video signal which was subjected to the field double- speed process.

According to the third embodiment, the shuffling process is executed by the field memory 53 and the video signal ⟨2⟩having a delay of 1/2 field for the input signal is formed. Thus, the 133-line delay in the first and second embodiments can be made unnecessary. Further, as compared with the construction in which it is necessary to use five field memories, since the apparatus can be constructed by four field memories, one field memory can be omitted.

Embodiment 4

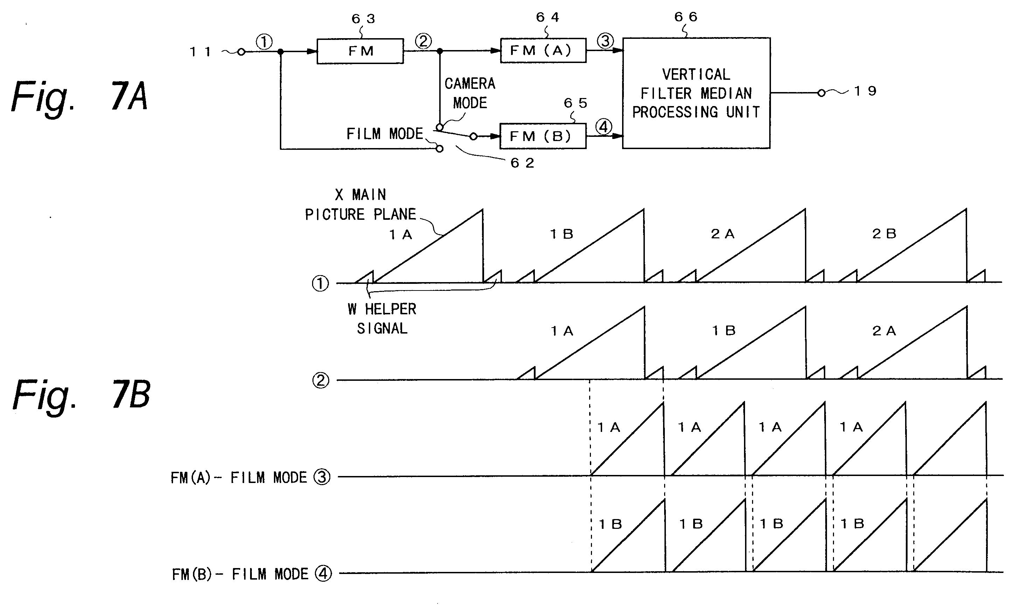

The fourth embodiment relates to an example using a rule in which there is no need to execute the process using the helper signals in the film mode of the television receiver of the PAL plus system and will now be described with reference to Fig. 7.

Fig. 7A shows a construction of the fourth embodiment and Fig. 7B is a schematic diagram showing a memory control method of each unit.

As shown in Fig. 7A, the fourth embodiment comprises: the input unit 11 to which the video signal is inputted; a field memory 63 as a field delay; a field memory 64 which can be accessed at random on a line unit basis; a field memory 65; switching means 62 for switching a camera mode and a film mode; a vertical filter median processing unit 66; the output unit 19; and the like. The switching means 62 is controlled by a signal to instruct the mode from a mode decoder 15.

The operation of the fourth embodiment with such a construction will be described.

In the film mode, the video signal ⟨1⟩inputted from the input unit 11 is inputted to the field memory 63 as a field delay element. In the field memory 63, a delaying process of one field is executed and the video signal ⟨2⟩is outputted. An output of the field memory 63 is inputted to the field memory 64 at the next stage.

In the field memory 64, only the video signal of the main picture portion of the A field is converted at a double speed, a delay of 1/2 field is caused, and the signal is continuously read out four times. Thus, the double-speed video signal ⟨3⟩which was delayed by 1/2 field for the video signal ⟨2⟩and doesn't include the helper signals is formed. Such a process can be performed only in case of treating only the main picture portion without arithmetically operating the helper signals. On the other hand, the present field (B field) is inputted as it is to the field memory 65. In the field memory 65, the video signal of only the main picture portion is similarly double-speed converted, a 1/2 field delay is caused, and the signal is continuously read out four times. Thus, the double-speed video signal ⟨4⟩which was delayed by 1/2 field for the video signal ⟨2⟩and doesn't include the helper signals is formed.

In the camera mode, the video signal ⟨1⟩inputted from the input unit 11 is supplied to the field memory 64, is inputted to the field memory 65 through the switching means 62, is shuffling processed by the field memory 65, and is outputted to the vertical filter median processing unit 66 at the next stage. As a delay amount, 179 to 192 lines have to be strictly maintained. The vertical filter median processing unit 66 assures the continuity of the images which were deteriorated by the shuffling process and outputs the signal as a field double-speed signal to the output unit 19.

Although the field memory 63 is used in the film mode in which the scanning line interpolation is executed by the intraframe process, it is unnecessary in the camera mode in which the scanning line interpolation is performed by the intrafield process. In the camera mode, the field memory 63 is used as a 133-line delay element, thereby assuring a delay amount of one field as a whole. As mentioned above, according to the fourth embodiment, the mode is switched by the switching means 62, the field memory 63 is also used as a 133-line delay, and the 133-line delay which is inherently necessary in the camera mode can be made unnecessary.

According to the fourth embodiment, the number of necessary field memories can be reduced from 5 to 3.

Embodiment 5

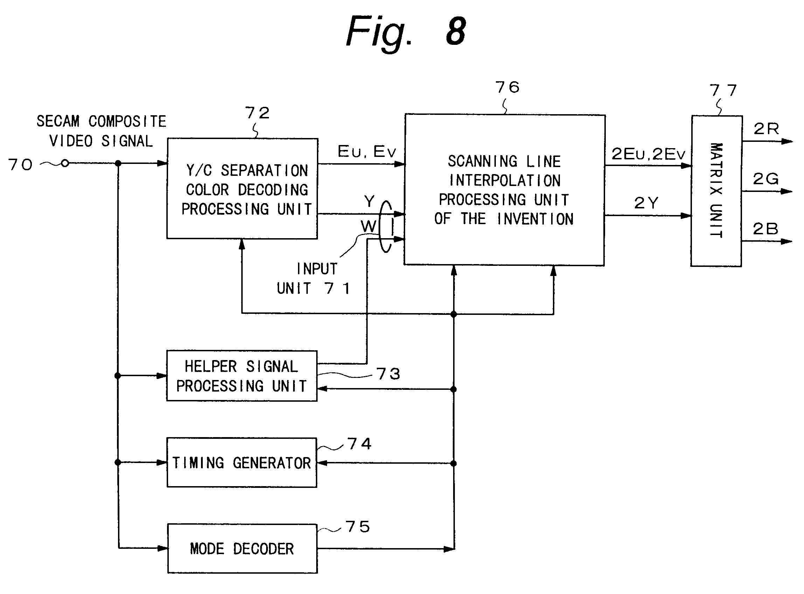

The fifth embodiment relates to an example in which the invention is applied to a television receiver of the SECAM system in place of the television receiver of the PAL plus system. Fig. 8 is a block diagram showing a construction of the fifth embodiment.

According to the fifth embodiment, an input terminal 70 to which an SECAM composite video signal is inputted, a Y/C separation color decoding processing unit 72, and a scanning line interpolation processing unit 76 to which the invention is applied are added as new component elements to the component elements of the television receiver of the PAL plus system such as helper signal processing unit 23, timing generator 24, mode decoder 25, matrix unit 30, and the like in Fig. 1.

The SECAM composite video signal inputted from the input terminal 70 is inputted in parallel to the Y/C separation color decoding processing unit 72, a helper signal processing unit 73, a timing generator 74, and a mode decoder 75.

In the Y/C separation color decoding processing unit 72, the luminance signal and the chrominance signals are separated by a 3-dimensional Y/C separation or the like and the chrominance signals are demodulated, so that color difference signals B-Y (Eu) and R-Y (Ev) are formed. Further, timings of those signals are matched by an SECAM switch or the like on the basis of a color order discrimination ID signal and a color demodulation is executed. The luminance signal Y and color difference signals Eu and Ev from the Y/C separation color decoding processing unit 72 are outputted to the scanning line interpolation processing unit 76 of the invention at the next stage. A scanning line interpolating process is executed by the scanning line interpolation processing unit 76 by the operation similar to that mentioned above and the resultant signals are outputted as a double-speed luminance signal 2Y and double-speed color difference signals 2Eu and 2Ev to a matrix unit 77. A subsequent explanation is omitted because it is overlapped.

The invention is not limited to the foregoing first to fifth embodiments but can use various embodiments. For example, although the invention has been described with respect to the television receivers of the PAL plus system and SECAM system, the invention can be also applied to a television receiver for use in both of the PAL-SECAM. Although the television receiver has been described above as an example of an image signal processing apparatus, the invention can be also applied to other AV equipment such as video equipment, monitor apparatus integrated with a recording medium, a projector apparatus, and the like. Further, the invention is not limited to the foregoing embodiments but can be also obviously developed to various forms.

As described above, according to the invention, the helper signal process and the flicker-free process which were separately processed are united under a predetermined memory control by the management means and are processed. Therefore, according to the invention, the memory can be rationally managed, the system can be efficiently operated, and the number of field memories to be used can be reduced.

| | |
|---|---|
| 11 | INPUT UNIT |
| 23, 33, 43, 53 | FIELD MEMORIES |
| 24, 34, 44, 54 | FIELD MEMORIES |
| 25, 35, 45, 55 | FIELD MEMORIES |
| 46 | FIELD MEMORY |
| 19 | OUTPUT UNIT |
| 12 | COLOR PLUS PROCESSING UNIT |
| 13 | HELPER SIGNAL PROCESSING UNIT |
| 15 | MODE DECODER |
| 16 | CHROMINANCE SIGNAL SCANNING LINE INTERPOLATION PROCESSING UNIT |
| 17 | LUMINANCE SIGNAL SCANNING LINE INTERPOLATION PROCESSING UNIT |
| 17a | MANAGEMENT MEANS |
| 18 | FLICKER-FREE PROCESSING UNIT |
| 22 | 85-LINE DELAY |
| 26 | VERTICAL FILTER MEDIAN PROCESSING UNIT |
| 52 | SWITCHING MEANS |
| V | NO-PICTURE PORTION |
| W | HELPER SIGNAL |
| X | MAIN PICTURE PORTION |
| Z | ID CONTROL SIGNAL |

**Claims**

1. An image signal processing apparatus for extracting a reinforcement signal included in an input image signal of an interlace system, performing a resolution reinforcement by said extracted reinforcement signal, and further performing a signal process to reduce a flicker,

characterized by comprising a memory which is commonly used in a shuffling process to rearrange so as to arrange one horizontal scanning line of said reinforcement signal every plurality of horizontal scanning lines of a main picture portion and a process to double a field frequency that is necessary for said reduction of the flicker for said resolution reinforcement.

2. An image signal processing apparatus according to claim 1, characterized in that
said image signal is a television signal of a color difference line sequential system having a reinforcement signal.

3. An image signal processing apparatus according to claim 1, characterized in that:
said memory is constructed by

a first memory to which the input image signal is supplied and which is controlled so as to start a reading operation with a predetermined time delay for a writing operation and executes said shuffling process with respect to first and second fields and reads out said same first and second fields at a double speed so that said first and second fields continue twice,
a second memory to which the image signal is supplied from said first memory and which reads out said first field at a double speed so that said same first field continues four times, respectively, and
a third memory to which the image signal is supplied from said first memory and which reads out said second field at a double speed so that said same second field continues four times, respectively; and
the image signals read out from said second and third memories are supplied to scanning line interpolating means.

4. An image signal processing apparatus according to claim 1, characterized in that:
said memory is constructed by

a first memory to delay the input image signal by one field,
a second memory to which the image signal is supplied from said first memory and which is controlled so as to start a reading operation with a predetermined time delay for a writing operation and executes said shuffling process with respect to the first field and reads out a first field at a double speed so that said same first field continues four times, respectively, and
a third memory to which said input image signal is supplied and which is controlled so as to start the reading operation with a predetermined time delay for the writing operation and executes said shuffling process with respect to a second field and reads out said second field at a double speed so that said same second field continues four times, respectively; and
the image signals read out from said second and third memories are supplied to scanning line interpolating means.

5. An image signal processing apparatus according to claim 3 or 4, characterized in that
delay means having a delay amount between a delay amount which occurs as a result of the processes and a delay amount of one field is provided on an input side.

6. An image signal processing apparatus according to claim 3 or 4, characterized in that
said reinforcement signal which arrives while the reading operation is being executed for the memory to perform the shuffling process is shunted into a shunt area in said memory and, after that, it is read out.

7. An image signal processing apparatus according to claim 1, characterized in that:
said memory is constructed by

a first memory to which the input image signal is supplied and which is controlled so as to start a reading operation with a predetermined time delay for a writing operation and executes said shuffling process with respect to first and second fields,
a second memory to which the image signal is supplied from said first memory and which reads out said first field at a double speed so that said same first field continues four times, respectively,
a third memory to which the image signal is supplied from said first memory and which reads out said second field at a double speed so that said same second field continues four times, respectively, and
a fourth memory for delay to which the image signal is supplied from said second memory and which generates an output synchronized with a read-out output of said third memory; and
the image signals read out from said third and fourth memories are supplied to scanning line interpolating means.

8. An image signal processing apparatus according to claim 1, characterized in that:
said memory is constructed by

a first memory which is used for delaying the input image signal by one field in a film mode in which a scanning line interpolation is performed by an intraframe process and for supplementing a delay amount which lacks in one field in a camera mode in which the scanning line interpolation is executed by an intrafield process, switching means to which the image signal from said first memory and said input image signal are supplied and which selects said input image signal in said film mode and selects the image signal from said first memory in said camera mode, a second memory to which the image signal from said first memory is supplied and which can be accessed at random for the shuffling process, and a third memory to which the image signal selected by said switching means is supplied and which can be accessed at random for the shuffling process; and the image signals read out from said second and third memories are supplied to scanning line interpolating means.

9. An image signal processing apparatus according to claim 1, characterized in that:
said image signal is a television signal of a color difference line sequential simultaneous system having a reinforcement signal.

10. An image signal processing method of extracting a reinforcement signal included in an input image signal of an interlace system, performing a resolution reinforcement by said extracted reinforcement signal, and further executing a signal process to reduce a flicker, characterized by comprising:

a shuffling step of rearranging so as to arrange one horizontal scanning line of said reinforcement signal every plurality of horizontal scanning lines of a main picture portion for said resolution reinforcement; and a step of performing a process to double a field frequency which is necessary for said flicker reduction by sharing a memory to be used for said shuffling.

Fig. 1

EP 0 763 937 A1

Fig. 2A

133 LINE DELEY

21

32

① FM 33

② FM (A) 34 ③

② FM (B) 35 ④

VERTICAL FILTER MEDIAN PROCESSING UNIT 36

29

Fig. 2B

X MAIN PICTURE PORTION

1A 1B 2A 2B

①

W HELPER SIGNAL

179 LINES

1A 1A 1B 1B 2A 2A 2B 2B

②

1A 1A 1A 1A 2A 2A

③

1B 1B 1B 1B 2B 2B

④

Fig. 3A

INPUT SIGNAL LINE NO.

WRITING

READING EXAMPLE 1

READING EXAMPLE 2

Fig. 3B

| H 1 | } 3 6 |
| M | } 2 1 5 |
| H 2 | } 3 6 |
| H3 (SHUNT AREA) | } 3 6 |

323 LINES

720 PIXELS

EP 0 763 937 A1

EP 0 763 937 A1

**Fig. 4A**

133 LINE DELEY

21

42

43 FM

44 FM (A)

45 FM (B)

46 VERTICAL FILTER MEDIAN PROCESSING UNIT

29

① ② ③ (1) ④

**Fig. 4B**

MAIN PICTURE PORTION

① 1A 1B 2A 2B

HELPER SIGNAL

② 1A 1B 2A

MAIN PICTURE PORTION

312 LINES

③ 179 LINES 1A 1A 1A 1A 2A 2A 2A 2A

HELPER SIGNAL

④ 179 LINES 1B 1B 1B 1B 2B 2B 2B 2B

Fig. 5A

X1 MAIN PICTURE PORTION

FIELD 1A

FIELD 2A

FM(A) 44-WRITING

W1

W1'

W2

X2

W2'

H1    M    H2

SHUNT TO H3

1A    1A    1A    1A    2A

179 LINES

-READING

Fig. 5B

H1

M

H2

H3    SHUNT AREA

## Fig. 6A

11 ─○─ ① → [ F M ] ② → [ F M (A) ] ③ → [ F M (A) ] ④ → [ VERTICAL FILTER MEDIAN PROCESSING UNIT ] ─○─ 1 9

53  54  55  56  57

[ F M (B) ] ⑤ →

## Fig. 6B

X MAIN PICTURE PLANE

1 A   1 B   2 A   2 B   3 A   3 B

①

W HELPER SIGNAL

1 A   1 B   2 A   2 B

②

1 A  1 A  1 A  1 A  2 A  2 A  2 A  2 A

③

1 A  1 A  1 A  1 A  2 A  2 A  2 A  2 A

④

1 B  1 B  1 B  1 B  2 B  2 B  2 B  2 B

⑤

EP 0 763 937 A1

Fig. 7A

Fig. 7B

EP 0 763 937 A1

# Fig. 8

SECAM COMPOSITE VIDEO SIGNAL

70

72 Y/C SEPARATION COLOR DECODING PROCESSING UNIT

Eu, Ev

Y

W

INPUT UNIT 71

76 SCANNING LINE INTERPOLATION PROCESSING UNIT OF THE INVENTION

2Eu, 2Ev

2Y

77 MATRIX UNIT

2R

2G

2B

73 HELPER SIGNAL PROCESSING UNIT

74 TIMING GENERATOR

75 MODE DECODER

EP 0 763 937 A1

# Fig. 9A

# Fig. 9B

# Fig. 9C

**V NO-PICTURE PORTION**
**W HELPER SIGNAL**

4

4
(3:1 SHUFFLING PROCESS)

16

16

3   9

3

9

V,W

X MAIN PICTURE PORTION

EP 0 763 937 A1

# Fig. 10

EP 0 763 937 A1

## Fig. 11A

$$\begin{pmatrix} Y = 8 \\ E_V = 2 \\ E_U = 2 \end{pmatrix}$$

1 —○— 12 ∕ → **FM** (2) — 12 ∕ → **FM (A)** (3) → **VERTICAL FILTERING PROCESSING UNIT** (5) — 12 ∕ —○— 6

(FILM MODE) 4

E BRANCH

— 12 ∕ → **FM (B)**

(FILM MODE OR CAMERA MODE)

## Fig. 11B

LINE NO.

X MAIN PICTURE PORTION (OF 1 FIELD)

LOWER HELPER SIGNAL

215

36

UPPER HELPER SIGNAL

|← 1FIELD →|← 1FIELD →|← 1FIELD →| TIME (t)

## Fig. 11C

LINE NO.

X MAIN PICTURE PORTION

6

1

W HELPER SIGNAL

TIME (t)

Fig. 12A

Fig. 12B — INPUT

Fig. 12C — A FIELD

Fig. 12D — B FIELD

MEDIAN FILTERING PROCESS

Fig. 12E — OUTPUT IN ORDINARY PROCESS

Fig. 12F — OUTPUT IN FILM MODE

EP 0 763 937 A1

*Fig.* 13

EP 0 763 937 A1

$$\begin{pmatrix} Y = 8 \\ E_V = 2 \\ E_U = 2 \end{pmatrix}$$

## INTERNATIONAL SEARCH REPORT

| International application No. |
|---|
| PCT/JP96/00822 |

**A. CLASSIFICATION OF SUBJECT MATTER**

Int. Cl$^6$  H04N7/015

According to International Patent Classification (IPC) or to both national classification and IPC

**B. FIELDS SEARCHED**

Minimum documentation searched (classification system followed by classification symbols)

Int. Cl$^6$  H04N7/00-7/01, H04N11/16

Documentation searched other than minimum documentation to the extent that such documents are included in the fields searched

Jitsuyo Shinan Koho                    1978 - 1995
Kokai Jitsuyo Shinan Koho              1978 - 1995

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 4-27288, A (Hitachi, Ltd.), January 30, 1992 (30. 01. 92)(Family: none) | 1 - 9 |
| A | JP, 2-101889, A (Pioneer Electronic Corp.), April 13, 1990 (13. 04. 90)(Family: none) | 1 - 9 |
| A | JP, 5-83745, A (Mitsubishi Electric Corp.), April 2, 1993 (02. 04. 93)(Family: none) | 1 - 9 |

☐ Further documents are listed in the continuation of Box C.    ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| June 20, 1996 (20. 06. 96) | July 9, 1996 (09. 07. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)